# EUROPEAN PATENT APPLICATION

(11) **EP 3 978 876 A1**
(43) Date of publication of application: **06.04.2022**
(21) Application number: 21197135.3
(22) Date of filing: 16.09.2021
(51) Int. Cl.: G01C 21/34

(54) **TRAVELING ROUTE SETTING APPARATUS**

(30) Priority: 28.09.2020 JP 2020162047
(71) Applicant: MAZDA MOTOR CORPORATION, Hiroshima 730-8670 (JP)
(72) Inventor: Ito, Seiichi, Hiroshima, 730-8670 (JP); Okamura, Masashi, Hiroshima, 730-8670 (JP); Maeda, Takashi, Hiroshima, 730-8670 (JP); Furukawa, Yuji, Hiroshima, 730-8670 (JP)
(74) Representative: Behr, Wolfgang

(57) **Abstract**

[Problem] A traveling route of a moving object to be proposed to a user is appropriately set based on an influence of a factor other than human interaction on an experience and an influence of human interaction on an experience.

[Means for Solution] A management apparatus 30 as a traveling route setting apparatus acquires, during moving in a vehicle 1, position information about the vehicle 1, driver's driving state information, and feeling state related information relating to a feeling state of the driver or a passenger; sets an α evaluation value obtained by evaluating each of a spot and a section in map data from the viewpoint of an influence of a factor other than human interaction on an experience, and a β evaluation value obtained by evaluating each of the spot and the section from the viewpoint of an influence of human interaction on an experience, based on the position information, the driving state information, and the feeling state related information which are acquired from a plurality of the vehicles 1; and sets a traveling route of the vehicle 1 to be proposed to a user based on the α and β evaluation values set for a plurality of the spots and the sections.

## Description

### [Technical Field]

The present invention relates to a traveling route setting apparatus that sets a traveling route through which a moving object travels.

### [Background Art]

Conventionally, there has been known a technique of proposing to a user a traveling route through which a moving object such as a vehicle travels. In particular, there has been recently developed a technique of proposing a traveling route that matches a user's taste. For example, JP 2018-100936 A discloses a technique of generating, from data collected from a plurality of vehicles, a first feeling map based on an own feeling at each position and a second feeling map based on a plurality of users' feelings at the respective positions, and proposing a traveling route based on these maps.

### [Summary of Invention]

### [Problem to be Solved by the Invention]

The present inventors have found that there are two types of patterns for a user to enjoy a certain "product." The first pattern is a pattern in which a user repeatedly performs his/her self-improvement for knowledge, skills, and the like relating to a "product" and thereby receives a function from the "product" (that is, stimulation), leading to the user's self-growth (hereinafter referred to as an "α cycle") . The second pattern is a pattern in which a user engages with "people" through a "product" and receives interaction through the communication with the "people," leading to the user enjoying group activities (hereinafter referred to as a "β cycle"). It should be noted that the "product" herein is a concept including entities (cameras, vehicles, buildings, scenery, and the like) and non-entities (sports, movies, and the like) and is moreover a concept including presences other than "people."

The α cycle, which greatly promotes the user's self-growth, is a cycle in which the user individually enjoys himself/herself. Accordingly, the user's activities in the α cycle are likely to stay within a small group with similar personal tastes (a small group of homogeneous users) even if the user has a relationship with other "people." On the other hand, the β cycle, which may not greatly promote the user's self-growth, is a cycle that provides interaction with many other users. Accordingly, the user's activities in the β cycle are not limited to a small group of homogeneous users but are likely to expand to activities in a large group in which various users mix with each other.

When a user who has performed either the α cycle or the β cycle performs the other activity in addition to the one activity, the user can obtain new knowledge and pleasure. Therefore, the present inventors have reached a conclusion that combining the α cycle and the β cycle and promoting the cycling can further enrich the user's pleasure relating to a certain "product" and consequently can enhance his/her quality of life. That is, the increased pleasure further enriches his/her life.

In particular, the present inventors have considered that it is preferable if it is possible to set a traveling route of a moving object to be proposed to a user from the viewpoint of the α cycle and the β cycle as described above. Specifically, the present inventors have considered that, by setting a traveling route that gives the user a function from a "product" inherent in a drive experience in the moving object and a function from "people" (respectively corresponding to an influence of a factor other than human interaction on an experience and an influence of human interaction on an experience), in other words, a traveling route that realizes the cycling of the α cycle and the β cycle, it is possible to promote expansion of the experiences through the moving object.

The present invention has been made to solve the above problem, and an object thereof is to provide a technical solution that provides corresponding support to the user.

### [Means for Solving the Problem]

To achieve the above object, the present invention is a traveling route setting apparatus characterized by being configured to: acquire, during moving in a moving object, position information about the moving object, driving state information indicating a driving state of the moving object driven by a driver, and feeling state related information relating to a feeling state of the driver and/or a passenger of the moving object; set a first evaluation value obtained by evaluating each of a spot and a section in map data from a viewpoint of an influence of a factor other than human interaction on an experience, and a second evaluation value obtained by evaluating each of the spot and the section from a viewpoint of an influence of human interaction on an experience, based on the position information, the driving state information, and the feeling state related information which are acquired from a plurality of the moving objects; and set a traveling route of the moving object to be proposed to a user based on the first and second evaluation values set for a plurality of the spots and the sections.

According to the present invention configured as described above, it is possible to set the traveling route to be proposed to the user in consideration of influences of each of the spots and each of the sections on the user's experience through a factor other than human interaction (corresponding to a function from a "product" (α cycle)), and influences of each of the spots and each of the sections on the user's experience through human interaction (corresponding to a function from "people" (β cycle)). Accordingly, it is possible to set a traveling route that gives the user a function from a "product" inherent in a drive experience in the moving object and a function from "people," in other words, a traveling route that realizes cycling of the α cycle and the β cycle. Therefore, according to the present invention, it is possible to promote expansion of experiences through the moving object by technical means. The present invention therefore provides a traveling route setting apparatus capable of appropriately setting a traveling route of a moving object to be proposed to a user based on an influence of a factor other than human interaction on an experience and an influence of human interaction on an experience.

The present invention is preferably configured to: set, for the user, a third evaluation value obtained by evaluating susceptibility to an influence of a factor other than human interaction on an experience, and a fourth evaluation value obtained by evaluating susceptibility to an influence of human interaction on an experience; and set the traveling route suitable for the user based on, in addition to the first and second evaluation values set for the spot and the section, the third and fourth evaluation values set for the user.

According to the present invention configured as described above, it is possible to set a traveling route according to the user's characteristics relating to susceptibility to a function from a "product" and to a function from "people."

The present invention is preferably configured to set, for the user with the third evaluation value higher than the fourth evaluation value, the traveling route including at least the spot or the section in which the second evaluation value is relatively high, and set, for the user with the fourth evaluation value higher than the third evaluation value, the traveling route including at least the spot or the section in which the first evaluation value is relatively high.

According to the present invention configured as described above, it is possible to propose a traveling route including the spot or the section in which the evaluation value corresponding to the lower one of the third and fourth evaluation values of the user is set to be high, so that it is possible to encourage the user to do a new experience.

The present invention is preferably configured to implement, with respect to the user, a questionnaire for evaluating susceptibility to an influence of a factor other than human interaction on an experience and susceptibility to an influence of human interaction on an experience, and generate questionnaire data in order to set the third and fourth evaluation values of the user based on a result of the questionnaire.

According to the present invention configured as described above, it is possible to set the accurate third and fourth evaluation values for the user based on the questionnaire result from the user.

The present invention is preferably configured to present a plurality of photographs in the questionnaire.

The present invention is preferably configured to implement the questionnaire at the time of an initial registration of a predetermined application for setting a traveling route.

The present invention is preferably configured to implement the questionnaire periodically.

The present invention is preferably configured to implement the questionnaire according to a request of the user.

The present invention is preferably configured to generate image data for displaying the traveling route on a map screen and displaying the first and second evaluation values of the spot and the section which are included in the traveling route on the map screen in a visually recognizable manner.

According to the present invention configured as described above, it is possible for the user to grasp, in addition to the traveling route, degrees of the first and second evaluation values of the spot and section which are included in this traveling route.

The present invention is preferably configured to: further acquire people count information indicating the number of occupants of the moving object; obtain the total number of moving objects which have visited the spot with one person, and the number of moving objects which have visited the spot with one person in a state where the traveling route is set, based on the people count information and the position information, and set the first evaluation value of the spot according to a ratio between these numbers; and obtain the total number of moving objects which have visited the spot with a plurality of people, and the number of moving objects which have visited the spot with a plurality of people in a state where the traveling route is set, based on the people count information and the position information, and set the second evaluation value of the spot according to a ratio between these numbers.

According to the present invention configured as described above, it is possible to accurately set the first and second evaluation values of each of the spots.

### The present invention is preferably configured to

According to the present invention configured as described above, it is possible to accurately set the first evaluation value of each of the sections.

The present invention is preferably configured to obtain the total number of moving objects which have passed through the section, and the number of moving objects which have indicated a favorable attitude to a scenery when passing through the section, based on the feeling state related information and the position information, and set the first evaluation value of the section according to a ratio between these numbers.

According to the present invention configured as described above, it is possible to accurately set the first evaluation value of each of the sections.

The present invention is preferably configured to: further acquire people count information indicating the number of occupants of the moving object; and obtain the total number of moving objects which have passed through the section with a plurality of people, and the number of moving objects in which a plurality of people have had an active feeling when passing through the section, based on the feeling state related information, the people count information, and the position information, and set the second evaluation value of the section according to a ratio between these numbers.

According to the present invention configured as described above, it is possible to accurately set the second evaluation value of each of the sections.

Preferably, a number of occupants of the moving object is obtained from at least one out of an image captured by the in-vehicle camera, an output of a seat belt sensor, and an output of a sitting sensor.

The present invention is preferably configured to, when both of the first and second evaluation values coincide with each other in two or more adjacent sections, handle these sections as one section.

The present invention is preferably configured to set the first evaluation value of the section based on a number of moving objects driven at a low gear and/or a high rotation speed when passing through the section.

The present invention is preferably configured to set the first evaluation value of the section based on a number of moving objects in which a line of sight of the passenger is facing the outside of the moving object in the case where a feeling of the passenger is active when passing through the section.

The present invention is preferably configured to set the second evaluation value of the section based on a number of moving objects in which a line of sight of the passenger is facing an inside of the moving object in the case where a feeling of the passenger is active when passing through the section.

The present invention is preferably configured to set the second evaluation value of the section based on a number of moving objects in which a volume of conversation in the moving object has become equal to or more than a predetermined value when passing through the section.

According to another aspect of the present invention a traveling route setting system is provided including a traveling route setting apparatus according to any of claims 1 to 14 and a moving object.

Preferably the moving object is a vehicle.

Preferably the moving object is a car, a bus, a motorbike, a motor scooter, a vessel, or an aircraft.

### [Advantageous Effect of Invention]

According to the traveling route setting apparatus of the present invention, the traveling route of the moving object to be proposed to the user is set based on an influence of a factor other than human interaction on an experience and an influence of human interaction on an experience, so that it is possible to promote expansion of experiences through the moving object by technical means.

### [Brief Description of Drawings]

FIG. 1 is a configuration view of a traveling route setting system according to an embodiment of the present invention.
FIG. 2 is an explanatory view of a questionnaire used for setting α and β evaluation values of a user in the embodiment of the present invention.
FIG. 3 is an explanatory view of a method of setting the α and β evaluation values of the user based on the questionnaire according to the embodiment of the present invention.
FIG. 4 is an explanatory view of a method of setting α and β evaluation values of spots according to the embodiment of the present invention.
FIG. 5 is an explanatory view illustrating candidates for spots and sections on a map which are used for setting a traveling route in the embodiment of the present invention.
FIG. 6 is a display screen example of the traveling route and a heat map which are set according to the embodiment of the present invention.
FIG. 7 is a processing flow of traveling route setting processing according to the embodiment of the present invention.

### [Mode for Carrying Out the Invention]

Hereinafter, a traveling route setting apparatus according to an embodiment of the present invention will be described with reference to the attached drawings.

### [System Configuration]

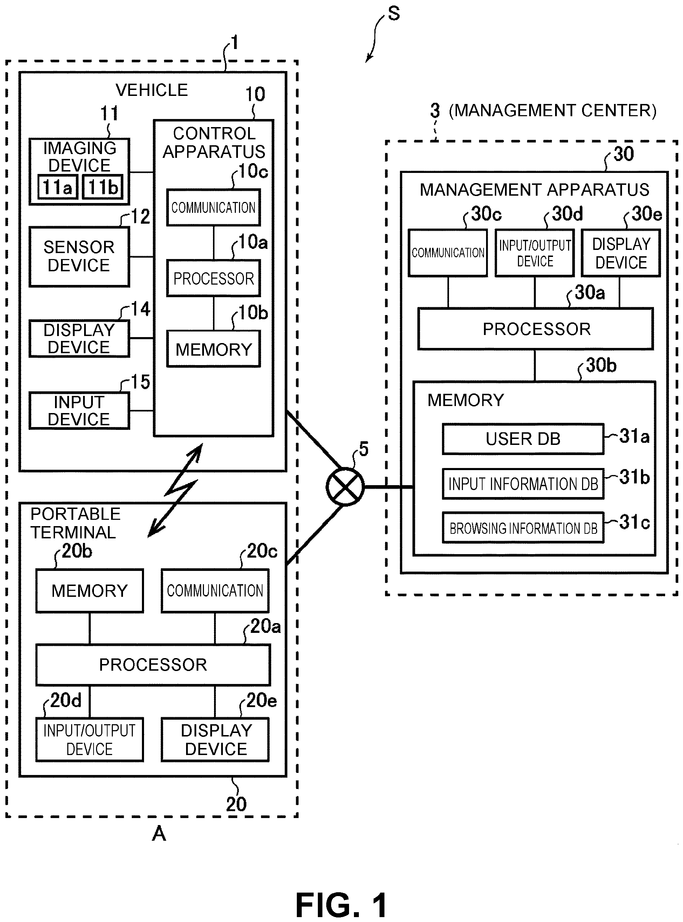

First, a schematic configuration of a traveling route setting system to which the traveling route setting apparatus according to the embodiment of the present invention is applied will be described with reference to FIG. 1. FIG. 1 is a configuration view of the traveling route setting system. A traveling route setting system S of the present embodiment is a system that sets a traveling route of a moving object (vehicle 1) to be proposed to a user A.

As illustrated in FIG. 1, the traveling route setting system S of the present embodiment includes a control apparatus 10 of the vehicle 1 possessed by the user A, a portable terminal 20 possessed by the user A, and a management apparatus (server apparatus) 30 of a management center 3, and these are configured to be capable of wirelessly communicating with each other. The control apparatus 10 and the portable terminal 20, and the management apparatus 30 are capable of wirelessly communicating with each other via a communication line (Internet line) 5. The control apparatus 10 and the portable terminal 20 are capable of communicating with each other using a near field communication technology (for example, Bluetooth (registered trademark)). Furthermore, in the traveling route setting system S, vehicles 1B and portable terminals 20B which are possessed by a plurality of other users B (for example, B1, B2, and B3) are also connected to the management apparatus 30 so as to be capable of wirelessly communicating therewith. Although the user A will be representative of a plurality of users in the following description, this description applies to the other users B.

First, the control apparatus 10 of the vehicle 1 is a computer apparatus including a processor 10a, a memory 10b, a communication circuit 10c, and the like, and is configured to perform processing by the processor 10a executing various programs stored in the memory 10b. The control apparatus 10 is connected to an imaging device 11, a sensor device 12, a display device 14, and an input device 15 which are mounted on the vehicle 1. The processor 10a stores in the memory 10b image data received from the imaging device 11, measurement data received from the sensor device 12, and input data received from the input device 15. Furthermore, the processor 10a repeatedly sends the image data, the measurement data, the input data, and these processing data to the management apparatus 30 via the communication circuit 10c. Furthermore, the processor 10a is programmed so as to execute predetermined processing based on a control signal received from the management apparatus 30.

The imaging device 11 is a video camera, and includes an in-vehicle camera 11a that captures an image of a driver (user A) and a passenger, and an out-of-vehicle camera 11b that captures an image of the outside of the vehicle 1. The out-of-vehicle camera 11b includes a plurality of video cameras that capture images of the front side, rear side, right side, and left side of the vehicle 1.

The sensor device 12 includes a vehicle sensor that measures a vehicle state, and a biological sensor that acquires occupant's biological information. The vehicle sensor includes a positioning device that measures a current position (position information) of the vehicle 1 on the earth (for example, a global positioning system (GPS) or a gyro sensor is used), a vehicle speed sensor, an acceleration sensor, a steering angle sensor, a yaw rate sensor, and other sensors.

In the present embodiment, the control apparatus 10 determines a driving state of the vehicle 1 driven by the driver, in particular, whether it is a driving state preferable for the driver (hereinafter referred to as a "sleek driving state"), based on an output of the acceleration sensor of the sensor device 12, wherein the sleek driving state is preferably a sleek driving state as defined in US2014/018974A1, in particular as defined in par. [0139]-[0179] of US2014/018974A1. Specifically, in the case of a relatively large amount of change in acceleration of the vehicle 1 (at the time of starting, stopping, turning starting, turning ending, or the like), when the amount of change in the acceleration is equal to or more than a predetermined value and the jerk (a differential value of the acceleration) is less than a predetermined value, the control apparatus 10 determines that the driving state of the driver is the sleek driving state. In this driving state, the driving operation is performed at a moderate speed, and thus the magnitude and speed of sway of the occupant's body fall within a predetermined range. Furthermore, in the case of a relatively small amount of change in acceleration of the vehicle 1 (in the case where acceleration, deceleration, and turning are performed at an almost constant acceleration), when the amount of change in the acceleration of the vehicle 1 is less than the predetermined value and the absolute value of the acceleration is equal to or more than a predetermined value, the control apparatus 10 determines that the driving state of the driver is the sleek driving state. In this driving state, the driving operation is performed at once according to an optimal operation amount and the operation state is maintained, so that the body of the occupant is maintained in a fixed state. It should be noted that it is not limited to only the control apparatus 10 performing such determination of the driving state, and the management apparatus 30 and/or the portable terminal 20 may perform a part or all of the determination of the driving state.

Furthermore, the biological sensor of the sensor device 12 includes an in-vehicle microphone that collects voice of the driver and the passenger in the vehicle, a heart rate measurement device that measures heart rate variability of the driver, and the like. Furthermore, the control apparatus 10 can also use the in-vehicle camera 11a as a biological sensor. For example, the control apparatus 10 can acquire an expression, a line-of-sight direction, a blink, and the like of the driver or the passenger, from image data captured by the in-vehicle camera 11a.

In the present embodiment, the control apparatus 10 acquires, as biological data, pupil diameters of the driver and the passenger, eye movements thereof, behaviors of the upper bodies including positions/orientations of the heads or the shoulders thereof, and facial expressions thereof which are acquired through analysis of the image data from the in-vehicle camera 11a, and the heart rate variability measured by the heart rate measurement device. Then, the control apparatus 10 analyzes psychological states (specifically, tension levels) of the driver and the passenger based on such biological data and determines whether the driver and the passenger are in mentally favorable active states. Furthermore, the control apparatus 10 analyzes, using algorithm such as a known "MIMOSYS (registered trademark)," the voice of the driver and the passenger collected by the in-vehicle microphone and obtains feeling states (specifically, mental activity levels) of the driver and the passenger. In particular, the control apparatus 10 determines the feeling states of the driver and the passenger based on both of the mental activity levels obtained through analysis of the voice and the psychological states obtained through analysis of the biological data. For example, the control apparatus 10 scores degrees of the mental activity levels obtained through the voice, while when it is determined that the psychological states obtained through the biological data are in favorably active states, the control apparatus 10 adds a predetermined point to the points of the mental activity levels to thereby score the feeling states of the driver and the passenger. Then, when the points thus obtained are equal to or more than a predetermined value, the control apparatus 10 determines that the driver and the passenger are in active states. It should be noted that it is not limited to only the control apparatus 10 performing such determination of the feeling states, and the management apparatus 30 and/or the portable terminal 20 may perform a part or all of the determination of the feeling states.

The display device 14 is, for example, a liquid crystal display, and can display a map, various traffic information, and the like. It should be noted that the portable terminal 20 may be used as a display device by connecting the portable terminal 20 to the control apparatus 10 in a wireless or wired manner.

The input device 15 is an input device including a touch input screen, a switch, a button, and the like, and the driver can input various information using the input device 15. The display device 14 may be used as a touch input screen. For example, when the driver encounters a favorable scenery or sightseeing spot while driving, the driver can input the fact using the input device 15. In this case, an operation button for inputting a favorable attitude to the scenery or the like (hereinafter referred to as a "like button") may be provided at a position at which the driver can operate the button in a vehicle cabin (provided on a steering device, in one example), or the like button may be displayed on a screen of the display device 14 configured as a touch input type.

The control apparatus 10 stores in the memory 10b the image data from the imaging device 11, the measurement data from the sensor device 12, the input data from the input device 15, and the processing data and sends these data at all times to the management apparatus 30 together with a vehicle identification number identifying the vehicle 1. The control apparatus 10 sends to the management apparatus 30 position information indicating a current position of the vehicle 1 and IG on/off information indicating whether an IG (specifically, an IG signal) of the vehicle 1 is on or off. Furthermore, the control apparatus 10 sends to the management apparatus 30 information indicating a driving state of the driver, that is, information indicating whether the driver is in the sleek driving state (driving state information), feeling information about the driver and the passenger, and like button operation information. The like button operation information is information indicating whether the like button is on. It should be noted that the like button operation information is information indirectly indicating a feeling(s) of the driver and/or the passenger, and information in which feeling information directly indicating feelings of the driver and the passenger is added to this information corresponds to "feeling state related information" in the present invention.

Furthermore, the control apparatus 10 also sends to the management apparatus 30 people count information indicating the number of people in the vehicle 1 (the number of occupants). This number of people can be obtained from an image captured by the in-vehicle camera 1a, an output of a seat belt sensor, an output of a sitting sensor, and the like.

It should be noted that the control apparatus 10 may perform user authentication when the user A uses the traveling route setting system S via the vehicle 1. For example, the control apparatus 10 may perform the user authentication (image authentication) using image data captured by the camera 11a. Furthermore, the control apparatus 10 may perform the user authentication using linking of the portable terminal 20 as a registered apparatus to the control apparatus 10 through a near field communication line. In this case, the portable terminal 20 is registered in advance in the control apparatus 10. In this user authentication, it is determined from the linking that the authorized user A is in the vehicle 1.

Next, the portable terminal 20 is a portable computer apparatus including a processor 20a, a memory 20b, a communication circuit 20c, an input/output device 20d, a display device 20e, and the like. The portable terminal 20 is configured to perform various processing by the processor 20a executing various programs stored in the memory 20b. Furthermore, the processor 20a sends and receives various data to and from the management apparatus 30 and the control apparatus 10 via the communication circuit 20c.

The portable terminal 20 acquires, using a positioning program, a current position based on communication with a surrounding communication station or based on satellite positioning with a GPS. The portable terminal 20 repeatedly sends to the management apparatus 30 a position signal indicating the acquired current position, a portable terminal identification number identifying the portable terminal 20, and other data.

The user A can access a website using a browser program (browser application) of the portable terminal 20. For example, the user A can access a database provided by the management apparatus 30 using the portable terminal 20 to browse various information.

Furthermore, using a predetermined program (application) of the portable terminal 20, the user A can cause the display device 20e to display various data received from the management apparatus 30, and send to the management apparatus 30 predetermined data input via the input/output device 20d. In particular, the user A can set a traveling route through which the vehicle 1 travels using the portable terminal 20. Specifically, the user A inputs a departure date and time, a total trip time, a departure point, an end point (home or accommodation such as a hotel), and the like using the input/output device 20d, and the portable terminal 20 sends to the management apparatus 30 the information thus input. Then, the management apparatus 30 sets a traveling route to be proposed to the user A based on the input information. The portable terminal 20 and/or the control apparatus 10 of the vehicle 1 display(s) the traveling route thus set. It should be noted that the control apparatus 10 of the vehicle 1 turns a predetermined mode (hereinafter referred to as a "trip mode") on when the IG of the vehicle 1 becomes on in a state where the traveling route is set, and turns the trip mode off when the vehicle 1 arrives at the end point of the traveling route and the IG of the vehicle 1 becomes off. The control apparatus 10 of the vehicle 1 sends to the management apparatus 30 trip mode information indicating such on/off of the trip mode.

Furthermore, the user A can answer a questionnaire for setting α and β evaluation values of the user A using the portable terminal 20. Specifically, the user A inputs an answer to the questionnaire displayed on the portable terminal 20 using the input/output device 20d, and the portable terminal 20 sends to the management apparatus 30 questionnaire answer information relating to the answer thus input. Then, the management apparatus 30 sets the α and β evaluation values of the user A based on the questionnaire answer information. It should be noted that the α evaluation value of the user A indicates susceptibility to a function from a "product" (corresponding to an α cycle) and the β evaluation value of the user A indicates susceptibility to a function from "people" (corresponding to a β cycle).

Furthermore, the portable terminal 20 can be automatically linked to the control apparatus 10 using a near field communication technology. When the portable terminal 20 is a communication apparatus registered in advance, the control apparatus 10 authorizes the portable terminal 20 and automatically establishes a communication line. At this time, the control apparatus 10 can receive the portable terminal identification number from the portable terminal 20 and add the portable terminal identification number to data to be sent to the management apparatus 30.

Next, the management apparatus 30 is a computer apparatus (server apparatus) including a processor 30a, a memory 30b, a communication circuit 30c, an input/output device 30d, a display device 30e, and the like, and is configured to perform various processing by the processor 30a executing programs stored in the memory 30b. The memory 30b stores various databases in addition to the programs. The management apparatus 30 corresponds to the "traveling route setting apparatus" in the present invention and executes traveling route setting processing for setting a traveling route of the vehicle 1 to be proposed to the user A.

The databases include a user database 31a, an input information database 31b, a browsing information database 31c, and the like. The user can browse these databases using a browser program of the portable terminal 20.

The user database 31a stores user data about the user A. The user data includes data that can be registered and updated by the user, and data automatically allocated by the management apparatus 30 at the time of user registration (a user identification number and the like). The user A can perform user registration in the management apparatus 30 using the portable terminal 20.

The user data includes a user identification number, a vehicle identification number, a portable terminal identification number, and the like of the user A. The user identification number is an identification number identifying each user. The vehicle identification number is an identification number identifying the vehicle 1 of the user A. The portable terminal identification number is an identification number identifying the portable terminal 20 of the user A. Furthermore, the user data includes the questionnaire answer information relating to an answer to the questionnaire for setting the α and β evaluation values of the user A, and the α and β evaluation values actually set based on the questionnaire answer information.

The input information database 31b is a database that stores the image data, the measurement data, the input data, and the like which are received from the vehicle 1 of the user A, map data, external traffic information, and the like. In particular, the input information database 31b includes traveling log data. The traveling log data is log data on a drive performed by the user A. The management apparatus 30 generates new traveling log data each time the user performs a drive (that is, when the trip mode becomes on). Specifically, during a period from when the trip mode of the vehicle 1 becomes on to when the trip mode of the vehicle 1 becomes off, various data is accumulated as the traveling log data for the drive. The traveling log data includes a unique drive identification number, the vehicle identification number identifying the vehicle 1, position information indicating a traveling trajectory of the vehicle 1, position information about the portable terminal 20, the IG on/off information, the driving state information, the people count information, and the like button operation information. Furthermore, the input information database 31b stores the feeling information about the driver and the feeling information about the passenger in association with such a drive identification number.

The browsing information database 31c is a database that stores data created by the management apparatus 30 processing data in the input information database 31b. The browsing information database 31c mainly includes a route related database. The route related database stores the departure point, the end point, the departure date and time, and the total trip time which are input by the user A, and the traveling route and the destination which are set based on these pieces of input information, in association with a route identification number given each time the traveling route is set. The route identification number is associated with the drive identification number described above. Furthermore, the route related database stores position information, an α evaluation value, and a β evaluation value which are associated with an identification number of each of a plurality of spots included in the map data, and starting point position information, ending point position information, an α evaluation value, and a β evaluation value which are associated with an identification number of each of a plurality of sections included in the map data, in association with the drive identification number, and these pieces of information and these values are used for setting a traveling route. It should be noted that the α evaluation value of each of the spot and the section indicates a degree of a function from a "product" given by each of them (corresponding to the α cycle) and the β evaluation value of each of the spot and the section indicates a degree of a function from "people" given by each of them (corresponding to the β cycle).

### [Traveling Route Setting Processing]

Next, the traveling route setting processing executed by the management apparatus 30 in the embodiment of the present invention will be described specifically.

In the present embodiment, the management apparatus 30 sets a traveling route of the vehicle 1 to be proposed to the user based on the α evaluation value obtained by evaluating each of the spot and the section in the map data from the viewpoint of an influence of a factor other than human interaction on an experience (corresponding to a function from a "product" (α cycle)), and the β evaluation value obtained by evaluating each of the spot and the section in the map data from the viewpoint of an influence of human interaction on an experience (corresponding to a function from "people" (β cycle)). Furthermore, the management apparatus 30 sets the α and β evaluation values of the spot and the section based on the position information, the driving state information, the feeling state related information, the people count information, and the like which are sequentially acquired from a plurality of the vehicles 1 when the trip mode is on (that is, when the vehicle 1 is moving according to the set traveling route). In this case, each time the management apparatus 30 acquires these pieces of information from the vehicle 1 whose trip mode is on, after the trip mode becomes off, the management apparatus 30 recalculates the α and β evaluation values of the spot and the section based on the acquired information to update these values.

Furthermore, in the present embodiment, the management apparatus 30 implements the questionnaire to the user in advance to set, for this user, the α evaluation value obtained by evaluating susceptibility to an influence of a factor other than human interaction on an experience and the β evaluation value obtained by evaluating susceptibility to an influence of human interaction on an experience. Then, the management apparatus 30 sets a traveling route suitable for the user based on, in addition to the α and β evaluation values of the spot and the section, the α and β evaluation values of the user.

It should be noted that the α and β evaluation values of the spot and the section respectively correspond to a "first evaluation value" and a "second evaluation value" in the present invention, and the α and β evaluation values of the user respectively correspond to a "third evaluation value" and a "fourth evaluation value" in the present invention. Each of these α and β evaluation values is set to a value within a range of, for example, 1 to 5.

In particular, in the present embodiment, the management apparatus 30 sets, for a user with the α evaluation value higher than the β evaluation value, a traveling route including a spot or a section in which the β evaluation value is relatively high, specifically, a spot or a section in which a β evaluation value larger than the β evaluation value of the user is set. In contrast, the management apparatus 30 sets, for a user with the β evaluation value higher than the α evaluation value, a traveling route including a spot or a section in which the α evaluation value is relatively high, specifically, a spot or a section in which an α evaluation value larger than the α evaluation value of the user is set. In this way, by proposing a traveling route including the spot or the section in which the evaluation value corresponding to the lower one of the α and β evaluation values of the user is set to be high, it is possible to encourage the user to do a new experience.

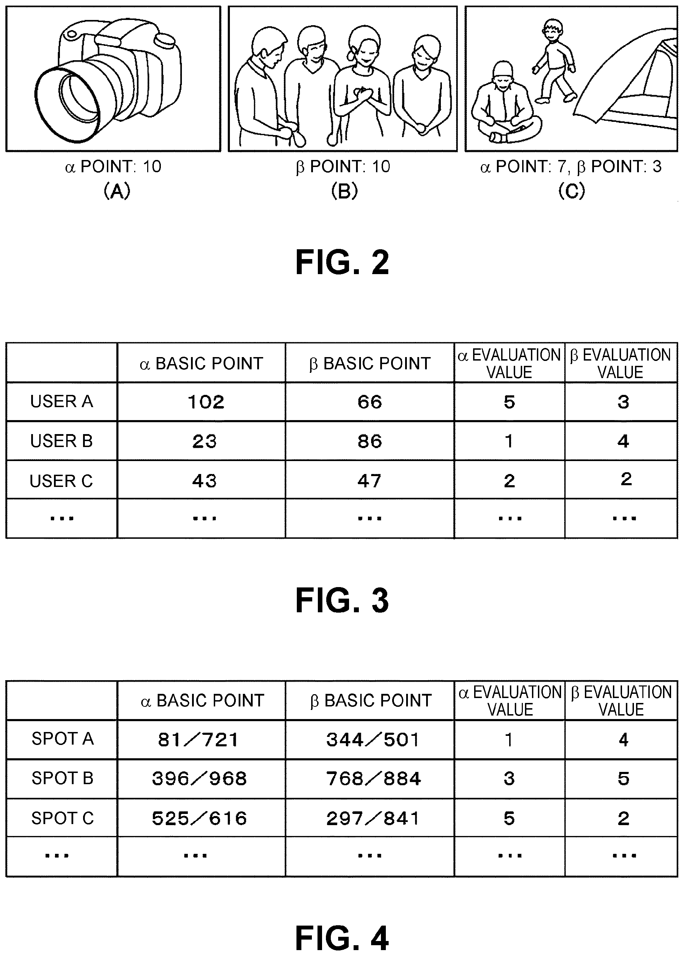

Next, a method of setting the α and β evaluation values of the user according to the present embodiment will be described with reference to FIGS. 2 and 3.

FIG. 2 is an explanatory view of the questionnaire for setting the α and β evaluation values of the user in the present embodiment. FIGS. 2(A) to 2(C) each illustrate an example of a photograph shown to the user in the questionnaire. The questionnaire is implemented by using the portable terminal 20. That is, the portable terminal 20 displays a questionnaire screen including a plurality of photographs as illustrated in FIG. 2, and the user views the questionnaire screen and answers the questionnaire using the input/output device 20d of the portable terminal 20. For example, the questionnaire is implemented at the time of the initial registration of a predetermined application for setting a traveling route (thereafter, it may be implemented periodically (for example, every three months) or may be implemented according to the user's request).

Specifically, a plurality of photographs are presented in the questionnaire, and the user chooses one photograph from among the presented photographs. In this case, a question "please choose the one you like the most, " a question "please choose what you want to experience," or the like is given, and the user chooses a photograph in response to this question. Furthermore, a plurality of these kinds of questions are prepared in the questionnaire, and the user chooses a photograph for each of the plurality of questions.

Each photograph is given an α point set in advance from the viewpoint of an influence of a factor other than human interaction on an experience (corresponding to a function from a "product" (α cycle)), and/or a β point set in advance from the viewpoint of an influence of human interaction on an experience (corresponding to a function from "people" (β cycle)). Specifically, a photograph showing a scene of having fun alone, a photograph showing only a product (FIG. 2(A)), or a photograph showing a few people (FIG. 2(C)) is set to a high α point (for example, 10 points). Having fun alone means that there is some attractive product, and thus the photograph showing a scene of having fun alone is set to the high α point. On the other hand, a photograph showing a plurality of people (FIG. 2(B)) or a photograph showing a scene of having fun with several people is set to a high β point (for example, 10 points). It should be noted that the α and β points set for each photograph are invisible to the user. Furthermore, a choice "none of them interests me" may be prepared for each question, and for the question in which this choice is chosen, the α point and the β point may be set to 0.

The management apparatus 30 generates questionnaire data including a plurality of questions including a plurality of respective photographs in which the α point and/or the β point is (are) set, and the portable terminal 20 receives the questionnaire data from the management apparatus 30 to implement the questionnaire. Then, the portable terminal 20 sends to the management apparatus 30 information about the photographs chosen by the user in a plurality of the respective questions in the questionnaire, as the questionnaire answer information. The management apparatus 30, based on this questionnaire answer information, individually adds up the α points and the β points which are set for the photographs chosen in a plurality of the respective questions to thereby obtain α and β basic points of the user. Then, the management apparatus 30 evaluates the α and β basic points of the user which are thus obtained, relative to the α and β basic points of all of the users, to thereby obtain the α and β evaluation values of the user.

FIG. 3 is an explanatory view of a method of setting the α and β evaluation values of the user based on the questionnaire according to the present embodiment. FIG. 3 illustrates specific examples of, for each of users A to C, α and β basic points obtained by individually adding up α points and β points which are set for a plurality of photographs chosen in the questionnaire, and α and β evaluation values set by relatively evaluating the α and β basic points (each of these values is a value from 1 to 5) .

The management apparatus 30 relatively evaluates the α and β basic points of each user by, for example, a method as described below, and sets the α and β evaluation values of each user. That is, the management apparatus 30 performs the following settings. (1) When the α or β basic point is within the top 20% of all of the users, the α or β evaluation value is set to "5." (2) When the α or β basic point is below the top 20% of all of the users and within the top 40% thereof, the α or β evaluation value is set to "4." (3) When the α or β basic point is below the top 40% of all of the users and within the top 60% thereof, the α or β evaluation value is set to "3." (4) When the α or β basic point is below the top 60% of all of the users and within the top 80% thereof, the α or β evaluation value is set to "2." (5) When the α or β basic point is below the top 80% of all of the users, the α or β evaluation value is set to "1."

Next, a method of setting the α and β evaluation values of the spot according to the present embodiment will be described with reference to FIG. 4. FIG. 4 illustrates specific examples of, for each of spots A to C, an α basic point, a β basic point, an α evaluation value, and a β evaluation value. It should be noted that each of the spots A to C particularly corresponds to a predetermined facility, a sightseeing spot, or the like.

In the present embodiment, the management apparatus 30 obtains, as the α basic point, a ratio of the number of the vehicles 1 which have visited each of the spots included in the map data with one person in a state where the trip mode is on, to the total number of the vehicles 1 which have visited the spot with one person, based on the people count information indicating the number of people in the vehicle 1 and the position information indicating a moving trajectory during moving of the vehicle 1. As described above, having fun alone means that there is some attractive product, and thus a spot at which a lot of vehicles have visited with one person obtains a high α basic point. Furthermore, the management apparatus 30 obtains, as the β basic point, a ratio of the number of the vehicles 1 which have visited each of the spots included in the map data with a plurality of people in a state where the trip mode is on, to the total number of the vehicles 1 which have visited the spot with a plurality of people, based on the people count information and the position information. Then, the management apparatus 30 evaluates the α and β basic points of one spot which are thus obtained, relative to the α and β basic points of all of the spots, to thereby set the α and β evaluation values of the spot (each of these values is a value from 1 to 5). A method of setting the α and β evaluation values through the relative evaluation of the α and β basic points of the spot is the same as the method of setting the α and β evaluation values of the user described above.

It should be noted that the method of setting the α and β evaluation values of the spot is not limited to the method described above. In another example, the α evaluation value of the spot may be set based on the number of visits to the spot by a user having a high α evaluation value, while the β evaluation value of the spot may be set based on the number of visits to the spot by a user having a high β evaluation value. In still another example, the α evaluation value of the spot may be set based on the number of users who have had an active feeling after visit to the spot, and the β evaluation value of the spot may be set based on the number of posts on an SNS about the spot.

Next, a method of setting the α and β evaluation values of the section according to the present embodiment will be described. In the present embodiment, the management apparatus 30 obtains the total number of the vehicles 1 which have passed through each of the sections included in the map data, and the number of the vehicles 1 which have been brought into the sleek driving state when passing through the section, based on the driving state information and the position information during moving of the vehicle 1, and sets the α evaluation value based on a ratio between these numbers. Furthermore, the management apparatus 30 obtains the total number of the vehicles 1 which have passed through each of the sections included in the map data, and the number of the vehicles 1 in which, when passing through the section, a like button on-operation indicating a favorable attitude to the scenery is made, based on the feeling state related information (in particular, the like button operation information) and the position information during moving of the vehicle 1, and sets the α evaluation value based on a ratio between these numbers.

In particular, the management apparatus 30 obtains, as the α basic point, a value obtained by adding a ratio of the number of the vehicles 1 which have been brought into the sleek driving state within a portion of equal to or more than a predetermined percentage (for example, 50% or more) of the section, to the total number of the vehicles 1 which have passed through the section, and a ratio of the number of the vehicles 1 in which the like button has become on when passing through the section, to the total number of the vehicles 1 which have passed through the section. Then, the management apparatus 30 evaluates the α basic point of one section which is thus obtained, relative to the α basic points of all of the sections, to thereby set the α evaluation value of the section (a value from 1 to 5). A method of setting the α evaluation value through the relative evaluation of the α basic point of the section is the same as the method described above. It should be noted that although the example has been illustrated here in which the α evaluation value of the section is set based on both of the number of the vehicles 1 which have been brought into the sleek driving state when passing through the section and the number of the vehicles 1 in which the like button has become on when passing through the section, in another example, the α evaluation value of the section may be set based on only either one of these.

On the other hand, the management apparatus 30 obtains, as the β basic point, a ratio of the number of the vehicles 1 in which a plurality of people have had an active feeling when passing through each of the sections included in the map data, to the total number of the vehicles 1 which have passed through the section with a plurality of people, based on the feeling state related information (in particular, the feeling information about the driver and the passenger), the people count information, and the position information during moving of the vehicle 1. Then, the management apparatus 30 evaluates the β basic point of one section which is thus obtained, relative to the β basic points of all of the sections, to thereby set the β evaluation value of the section (a value from 1 to 5). A method of setting the β evaluation value through the relative evaluation of the β basic point of the section is also the same as the method described above.

It should be noted that the section in which the α and β evaluation values are set is, in one example, defined by dividing in advance a road in the map data into predetermined lengths (for example, 100 m) and, in another example, defined by a link between adjacent nodes. Furthermore, when both of the α and β evaluation values coincide with each other in two or more adjacent sections, these sections may be handled as one section and used for setting of a traveling route. This is because when sections having the same characteristics are continuous, it is desirable to present to the user the sections as a unified section (continuous section).

It should be noted that the method of setting the α and β evaluation values of the section is not limited to the method described above. In another example, the α evaluation value of the section may be set based on the number of the vehicles 1 driven at a low gear and/or a high rotation speed when passing through the section. In still another example, the α evaluation value of the section may be set based on the number of the vehicles 1 in which the line of sight of the passenger is facing the outside of the vehicle in the case where the feeling of the passenger is active when passing through the section, while the β evaluation value of the section may be set based on the number of the vehicles 1 in which the line of sight of the passenger is facing the inside of the vehicle in the case where the feeling of the passenger is active when passing through the section. In still another example, the β evaluation value of the section may be set based on the number of the vehicles 1 in which the volume of conversation in the vehicle has become equal to or more than a predetermined value when passing through the section.

Next, a method of setting the traveling route according to the present embodiment will be described. In the present embodiment, the management apparatus 30 sets a traveling route suitable for the user based on the α and β evaluation values of each of the spots and each of the sections and the α and β evaluation values of the user which are set as described above, according to a condition defined by the departure point, the end point, the departure date and time, and the total trip time which are input to the portable terminal 20 by the user (hereinafter referred to as a "trip condition").

Specifically, the management apparatus 30 sets, for a user with the α evaluation value higher than the β evaluation value, a traveling route including at least a spot or a section in which a β evaluation value larger than the β evaluation value of the user is set, and a spot or a section in which an α evaluation value same as or larger than the α evaluation value of the user is set. In contrast, the management apparatus 30 sets, for a user with the β evaluation value higher than the α evaluation value, a traveling route including at least a spot or a section in which an α evaluation value larger than the α evaluation value of the user is set, and a spot or a section in which a β evaluation value same as or larger than the β evaluation value of the user is set. It should be noted that, for a user with the α evaluation value equal to the β evaluation value, there may be set a traveling route including a spot or a section in which α and β evaluation values same as or larger than the respective α and β evaluation values of the user are set.

Furthermore, the management apparatus 30 generates image data for causing the portable terminal 20 and the vehicle 1 (specifically, the display device 20e of the portable terminal 20 and the display device 14 of the vehicle 1) to display the traveling route thus set. Specifically, the management apparatus 30 displays the set traveling route on a map screen and displays the α and β evaluation values of the spot and the section on the map screen in a visually recognizable manner. More specifically, the management apparatus 30 displays the α and β evaluation values of the spot and the section which are included in the traveling route, by a heat map.

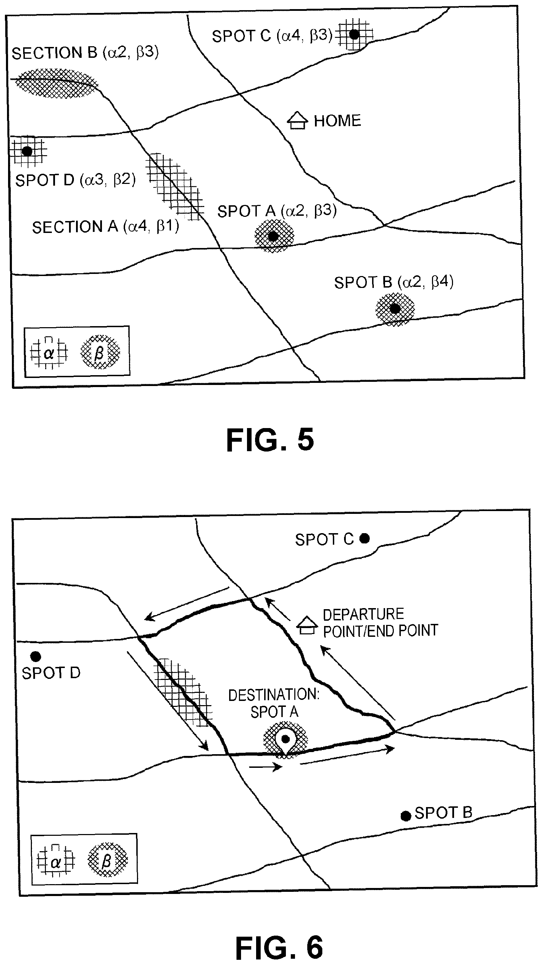

Here, a specific example of a method of setting the traveling route according to the present embodiment will be described with reference to FIGS. 5 and 6. FIG. 5 is an explanatory view illustrating, on a map, candidates for the spots and the sections which are used for setting the traveling route in the present embodiment (which are not provided to the user). FIG. 6 is a display screen example of the traveling route and the heat map which are set according to the present embodiment. This screen is displayed on the display device 20e of the portable terminal 20 and the display device 14 of the vehicle 1. Here, a description will be given of an example of a case where the trip condition is input in which the α and β evaluation values of the user are respectively 4 and 2, the departure point and the end point are set to home, and the total trip time is set to 3 hours.

FIG. 5 illustrates, under the trip condition as described above, spots A to D and sections A and B (corresponding to a continuous section) which can be referred to in setting processing of the traveling route, and the α and β evaluation values set for the spots A to D and the sections A and B. Furthermore, FIG. 5 illustrates, by a heat map, larger ones of the α and β evaluation values of the spots A to D and the sections A and B. For example, a heat map representing that the β evaluation value is larger than the α evaluation value is illustrated for the spots A and B and the section B, and a heat map representing that the α evaluation value is larger than the β evaluation value is illustrated for the spots C and D and the section A.

In the example above, the α evaluation value (4) of the user is higher than the β evaluation value (2) of the user, and thus there are set a traveling route including the spot A in which a β evaluation value (3) larger than the β evaluation value (2) of the user is set, and the section A in which an α evaluation value (4) same as the α evaluation value (4) of the user is set. In this case, as illustrated in FIG. 6, a traveling route including the spot A and the section A and a heat map of each of the spot A and the section A are displayed on the map screen. Specifically, a heat map representing that the β evaluation value is larger than the α evaluation value is displayed for the spot A, and a heat map representing that the α evaluation value is larger than the β evaluation value is displayed for the section A.

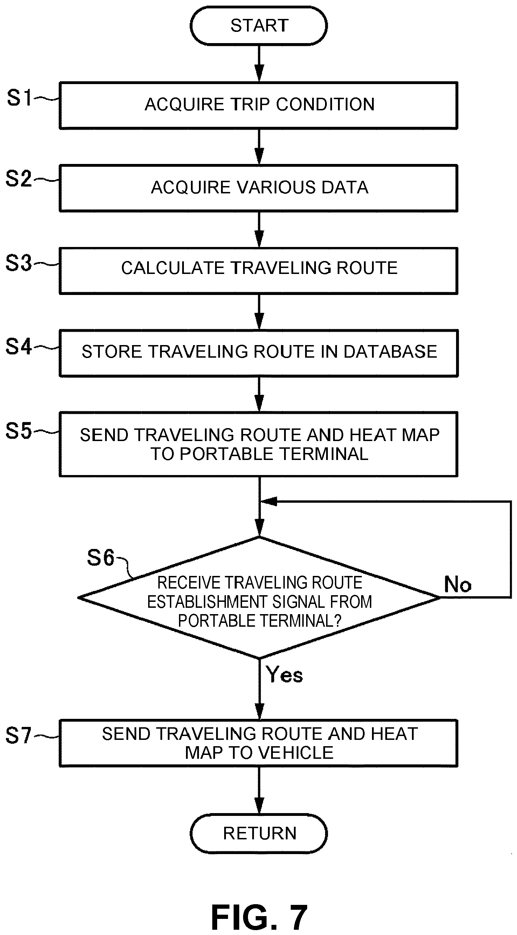

Next, an overall flow of the traveling route setting processing according to the present embodiment will be described with reference to FIG. 7. FIG. 7 illustrates a processing flow of the traveling route setting processing executed by the management apparatus 30 in the present embodiment. It should be noted that the traveling route setting processing is started when the trip condition input by the user is sent from the portable terminal 20 to the management apparatus 30. In this case, the user activates the predetermined application installed on the portable terminal 20 for setting a traveling route and, after logging in this application, inputs the trip condition to the portable terminal 20.

First, the management apparatus 30 acquires the trip condition sent from the portable terminal 20 (S1). Specifically, the management apparatus 30 acquires, as the trip condition, the departure point, the end point, the departure date and time, and the total trip time which are input to the portable terminal 20 by the user.

Next, the management apparatus 30 reads out from the memory 30b various data necessary for setting a traveling route, according to the acquired trip condition and the like (S2). Specifically, the management apparatus 30 first refers to the user database 31a to thereby identify the user identification number of the user of the portable terminal 20 from the portable terminal identification number of the portable terminal 20 to which the trip condition is sent, and acquire the α and β evaluation values of the user which are associated with this user identification number. Furthermore, the management apparatus 30 refers to the route related database of the browsing information database 31c to thereby acquire the position information about a plurality of spots, the α and β evaluation values thereof, the starting point position information and the ending point position information about a plurality of sections, and the α and β evaluation values thereof which are used for setting a traveling route. In one example, the management apparatus 30 roughly obtains a range in which the vehicle 1 can travel, based on the departure point, the end point, and the total trip time, identifies a plurality of spots and sections included within this range, and acquires the α and β evaluation values of the spots and the sections, and the like.

Next, the management apparatus 30 obtains a traveling route to be proposed to the user based on the α and β evaluation values of the user and the α and β evaluation values of the plurality of spots and sections which are acquired as described above, and the like (S3). In this case, the management apparatus 30 obtains, of traveling routes satisfying the trip condition input by the user, that is, the condition on the departure point, the end point, the departure date and time, and the total trip time, a traveling route suitable for the user based on the α and β evaluation values of the user and the α and β evaluation values of each of the spots and each of the sections. Specifically, the management apparatus 30 obtains, for a user with the α evaluation value higher than the β evaluation value, a traveling route including at least a spot or a section in which a β evaluation value larger than the β evaluation value of the user is set, and a spot or a section in which an α evaluation value same as or larger than the α evaluation value of the user is set. In contrast, the management apparatus 30 obtains, for a user with the β evaluation value higher than the α evaluation value, a traveling route including at least a spot or a section in which an α evaluation value larger than the α evaluation value of the user is set, and a spot or a section in which a β evaluation value same as or larger than the β evaluation value of the user is set. Furthermore, the management apparatus 30 also creates a heat map for displaying the α and β evaluation values of the spot and the section which are included in the traveling route thus obtained.

Next, the management apparatus 30 stores the traveling route obtained as described above (which may also include the heat map) in the route related database of the browsing information database 31c (S4). Next, the management apparatus 30 sends the traveling route and the heat map to the portable terminal 20 (S5) . The traveling route and the heat map which are thus sent are displayed on the display device 20e of the portable terminal 20.

Next, the management apparatus 30 determines whether a signal for establishing the traveling route sent to the portable terminal 20 (traveling route establishment signal) has been received from the portable terminal 20 (S6). The traveling route establishment signal is sent from the portable terminal 20 to the management apparatus 30 when the user confirms the traveling route and the heat map which are displayed on the portable terminal 20 and performs an operation for establishing (deciding, in other words) this traveling route. It should be noted that the user can cancel the traveling route, and in that case, a traveling route cancel signal is sent to the management apparatus 30. The management apparatus 30, when receiving the traveling route cancel signal, may set a new traveling route to be proposed to the user.

The management apparatus 30, when receiving the traveling route establishment signal from the portable terminal 20 (Yes in S6), sends the traveling route and the heat map to the vehicle 1 (S7). The vehicle 1, after thus receiving the traveling route and the heat map, when the IG becomes on, turns the trip mode on. Then, the vehicle 1 causes the display device 14 to display the traveling route and the heat map to perform a route guidance according to this traveling route. It should be noted that while the route guidance is thus being performed according to the traveling route, that is, while the trip mode is on (specifically, from when the trip mode becomes on to when the trip mode becomes off), the vehicle 1 continues to send to the management apparatus 30 the position information about the vehicle 1, the driving state information, the feeling information about the driver and the passenger, the people count information, the like button operation information, and the like. Then, after the trip mode of the vehicle 1 becomes off, the management apparatus 30 recalculates the α and β evaluation values of the spot and the section based on, in addition to the information acquired from the vehicle 1, information acquired so far from a plurality of the other vehicles 1, and stores these values in the route related database of the browsing information database 31c.

### [Functions and Effects]

Next, functions and effects of the traveling route setting apparatus according to the present embodiment will be described.

In the present embodiment, the management apparatus 30 as the traveling route setting apparatus sets α and β evaluation values of each of spots and each of sections based on the position information about the vehicle 1, the driving state information indicating a driving state of the vehicle 1 driven by the driver, and the feeling state related information relating to a feeling state of the driver and/or the passenger which are acquired from a plurality of the vehicles 1, and sets a traveling route to be proposed to the user based on the α and β evaluation values set for a plurality of the spots and the sections. Thus, it is possible to set the traveling route to be proposed to the user in consideration of influences of each of the spots and each of the sections on the user's experience through a factor other than human interaction, and influences of each of the spots and each of the sections on the user's experience through human interaction. Accordingly, it is possible to set a traveling route that gives the user a function from a "product" inherent in a drive experience and a function from "people," in other words, a traveling route that realizes cycling of the α cycle and the β cycle. Therefore, according to the present embodiment, it is possible to promote expansion of experiences through the vehicle 1.

Furthermore, according to the present embodiment, the management apparatus 30 sets α and β evaluation values of the user, and sets a traveling route suitable for the user based on, in addition to the α and β evaluation values of the spot and the section, the α and β evaluation values of the user. Thus, it is possible to set a traveling route according to the user's characteristics relating to susceptibility to a function from a "product" and to a function from "people."

In particular, according to the present embodiment, the management apparatus 30 sets, for a user with the α evaluation value higher than the β evaluation value, a traveling route including a spot or a section in which the β evaluation value is relatively high, and sets, for a user with the β evaluation value higher than the α evaluation value, a traveling route including a spot or a section in which the α evaluation value is relatively high. Thus, it is possible to propose a traveling route including the spot or the section in which the evaluation value corresponding to the lower one of the α and β evaluation values of the user is set to be high, so that it is possible to encourage the user to do a new experience.

Furthermore, according to the present embodiment, the management apparatus 30 provides the user with the questionnaire for setting the α and β evaluation values of the user. Thus, it is possible to set accurate α and β evaluation values for the user based on the questionnaire result from the user.

Furthermore, according to the present embodiment, the management apparatus 30 displays the traveling route on the map screen and displays the α and β evaluation values of the spot and the section which are included in this traveling route on the map screen in a visually recognizable manner. Thus, it is possible for the user to grasp, in addition to the traveling route, degrees of the α and β evaluation values of the spot and the section which are included in this traveling route.

Furthermore, according to the present embodiment, the management apparatus 30 obtains the total number of the vehicles 1 which have visited the spot with one person, and the number of the vehicles 1 which have visited this spot with one person in a state where the traveling route is set, and sets the α evaluation value of this spot according to a ratio between these numbers, and the management apparatus 30 obtains the total number of the vehicles 1 which have visited the spot with a plurality of people and the number of the vehicles 1 which have visited this spot with a plurality of people in a state where the traveling route is set, and sets the β evaluation value of this spot according to a ratio between these numbers. Thus, it is possible to accurately set the α and β evaluation values of each of the spots.

Furthermore, according to the present embodiment, the management apparatus 30 obtains the total number of the vehicles 1 which have passed through the section and the number of the vehicles 1 which have been brought into a preferable driving state when passing through this section, and sets the α evaluation value of this section according to a ratio between these numbers. Thus, it is possible to accurately set the α evaluation value of each of the sections.

Furthermore, according to the present embodiment, the management apparatus 30 obtains the total number of the vehicles 1 which have passed through the section and the number of the vehicles 1 which have indicated a favorable attitude to a scenery when passing through this section, and sets the α evaluation value of this section according to a ratio between these numbers. Thus, it is possible to accurately set the α evaluation value of each of the sections.

Furthermore, according to the present embodiment, the management apparatus 30 obtains the total number of the vehicles 1 which have passed through the section with a plurality of people and the number of the vehicles 1 in which a plurality of people have had an active feeling when passing through this section, and sets the **β** evaluation value of this section according to a ratio between these numbers. Thus, it is possible to accurately set the **β** evaluation value of each of the sections.

### [Modification]

Although in the present embodiment described above, the embodiment in which the moving object is a vehicle such as a car has been described, the moving object is not limited to a vehicle being a car but includes a bus, a motorbike, a motor scooter, a vessel, or an aircraft.

### [Reference Signs List]

1 vehicle (moving object)
3 management center
10 control apparatus
12 sensor device
14 display device
15 input device
20 portable terminal
20d input/output device
20e display device
30 management apparatus (traveling route setting apparatus)
A user
S traveling route setting system

## Claims

1. A traveling route setting apparatus (30) **characterized by** being configured to:
acquire, during moving in a moving object (1), position information about the moving object (1), driving state information indicating a driving state of the moving object (1) driven by a driver, and feeling state related information relating to a feeling state of the driver and/or a passenger of the moving object (1);
set a first evaluation value **(α)** obtained by evaluating each of a spot and a section in map data from a viewpoint of an influence of a factor other than human interaction on an experience, and a second evaluation value **(β)** obtained by evaluating each of the spot and the section from a viewpoint of an influence of human interaction on an experience, based on the position information, the driving state information, and the feeling state related information which are acquired from a plurality of moving objects (1); and
set a traveling route of the moving object (1) to be proposed to a user (A) based on the first and second evaluation values **(α, β)** set for a plurality of the spots and the sections.

2. The traveling route setting apparatus (30) according to claim 1, being configured to:
set, for the user (A), a third evaluation value **(α)** obtained by evaluating susceptibility to an influence of a factor other than human interaction on an experience, and a fourth evaluation value **(β)** obtained by evaluating susceptibility to an influence of human interaction on an experience; and
set the traveling route suitable for the user (A) based on, in addition to the first and second evaluation values set **(α, β)** for the spot and the section, the third and fourth evaluation values **(α, β)** set for the user (A).

3. The traveling route setting apparatus (30) according to claim 2, being configured to set, for a user (A) with the third evaluation **(α)** value higher than the fourth evaluation value **(β),** the traveling route including at least the spot or the section in which the second evaluation value **(β)** is relatively high, and set, for a user (A) with the fourth evaluation value **(β)** higher than the third evaluation value **(α),** the traveling route including at least the spot or the section in which the first evaluation value **(α)** is relatively high.

4. The traveling route setting apparatus (30) according to claim 2 or 3, being configured to implement, with respect to the user (A), a questionnaire for evaluating susceptibility to an influence of a factor other than human interaction on an experience and susceptibility to an influence of human interaction on an experience, and generate questionnaire data in order to set the third and fourth evaluation values **(α, β)** of the user (A) based on a result of the questionnaire.

5. The traveling route setting apparatus (30) according to claim 4, configured to:
present a plurality of photographs in the questionnaire and/or
the traveling route setting apparatus (30) being configured to implement the questionnaire at the time of an initial registration of a predetermined application for setting a traveling route, or the questionnaire is implemented periodically or the questionnaire is implemented according to a request of the user (A).

6. The traveling route setting apparatus (30) according to any one of claims 1 to 5, being configured to generate image data for displaying the traveling route on a map screen and displaying the first and second evaluation values **(α, β)** of the spot and the section which are included in the traveling route on the map screen in a visually recognizable manner.

7. The traveling route setting apparatus (30) according to any one of claims 1 to 6, being configured to:
further acquire people count information indicating a number of occupants of the moving object (1);
obtain a total number of moving objects (1) which have visited the spot with one person, and a number of moving objects (1) which have visited the spot with one person in a state where the traveling route is set, based on the people count information and the position information, and set the first evaluation value (α) of the spot according to a ratio between these numbers; and
obtain a total number of moving objects (1) which have visited the spot with a plurality of people, and a number of moving objects (1) which have visited the spot with a plurality of people in a state where the traveling route is set, based on the people count information and the position information, and set the second evaluation value **(β)** of the spot according to a ratio between these numbers.

8. The traveling route setting apparatus (30) according to any one of claims 1 to 7, being configured to obtain a total number of moving objects (1) which have passed through the section, and a number of moving objects (1) which have been brought into a preferable driving state when passing through the section, based on the driving state information and the position information, and set the first evaluation value **(α)** of the section according to a ratio between these numbers.

9. The traveling route setting apparatus (30) according to any one of claims 1 to 8, being configured to obtain a total number of moving objects (1) which have passed through the section, and a number of moving objects (1) which have indicated a favorable attitude to a scenery when passing through the section, based on the feeling state related information and the position information, and set the first evaluation value (α) of the section according to a ratio between these numbers.

10. The traveling route setting apparatus (30) according to any one of claims 1 to 9, being configured to:
further acquire people count information indicating a number of occupants of the moving object (1); and
obtain a total number of moving objects (1) which have passed through the section with a plurality of people, and a number of moving objects (1) in which a plurality of people have had an active feeling when passing through the section, based on the feeling state related information, the people count information, and the position information, and set the second evaluation value **(β)** of the section according to a ratio between these numbers.

11. The traveling route setting apparatus (30) according to any of the preceding claims, wherein a number of occupants of the moving object (1) is obtained from at least one out of an image captured by the in-vehicle camera (11a), an output of a seat belt sensor, and an output of a sitting sensor.

12. The traveling route setting apparatus (30) according to any of the preceding claims configured to:
when both of the first and second evaluation values **(α, β)** coincide with each other in two or more adjacent sections, handle these sections as one section.

13. The traveling route setting apparatus (30) according to any of the preceding claims configured to:
set the first evaluation value (α) of the section based on a number of moving objects (1) driven at a low gear and/or a high rotation speed when passing through the section, and/or
set the first evaluation value **(α)** of the section based on a number of moving objects (1) in which a line of sight of the passenger is facing the outside of the moving object (1) in the case where a feeling of the passenger is active when passing through the section.

14. The traveling route setting apparatus (30) according to any of the preceding claims configured to:
set the second evaluation value **(β)** of the section based on a number of moving objects (1) in which a line of sight of the passenger is facing an inside of the moving object (1) in the case where a feeling of the passenger is active when passing through the section, and/or
set the second evaluation value **(β)** of the section based on a number of moving objects (1) in which a volume of conversation in the moving object has become equal to or more than a predetermined value when passing through the section.

15. A traveling route setting system (S) including:
a traveling route setting apparatus (30) according to any preceding claim; and
a moving object (1);
wherein preferably the moving object (1) is a vehicle, in particular a car, a bus, a motorbike, a motor scooter, a vessel, or an aircraft.
